# EUROPEAN PATENT SPECIFICATION

(11) **EP 3 256 318 B1**
(45) Date of publication and mention of the grant of the patent: **28.10.2026**
(21) Application number: 16750067.7
(22) Date of filing: 16.02.2016
(51) Int. Cl.: C08J 7/04, C08J 7/043, C09J 7/29

(54) **HOT-MELT, CURL-FREE STRUCTURES**
HEISSSCHMELZENDE, WIRBELFREIE STRUKTUREN
STRUCTURES THERMOFUSIBLES SANS GONDOLAGE

(30) Priority: 13.02.2015 US 201562116164 P
(43) Date of publication of application: 20.12.2017
(73) Proprietor: Jindal Innovation Center SRL, 6761 Virton (BE)
(72) Inventor: PIRAN, David, 55150 Laurent sur Othain (FR); GRINGOIRE, Bruno R., 6792 Rachecourt (BE); GRISARD, William, 55600 Marville (FR)
(74) Representative: Barker Brettell LLP
(86) International application number: PCT/US2016/018088
(87) International publication number: WO 2016/131054

(56) References cited:
- EP-A1- 0 012 513
- EP-A2- 0 088 535
- EP-A2- 0 461 772
- WO-A1-2014/070241
- US-A- 4 564 559
- US-A- 5 698 333
- US-A1- 2007 248 810
- US-A1- 2008 009 413
- US-A1- 2008 193 728
- US-A1- 2011 097 548
- US-A1- 2012 282 476

## Description

### FIELD

The disclosure relates to hot-melt, curl-free film structures.

### BACKGROUND

Three major types of adhesive in pressure-sensitive ("PS") labeling are hot-melt, solvent-based and water-based adhesives. Hot- melt coating is the fastest growing adhesive system used in the pressure-sensitive adhesive ("PSA") industry. PSA, self-adhesive, or self-stick adhesive is an adhesive, which forms bond when pressure is applied to unite the adhesive with the adherend. These PSA are not considered as adhesives that are "activable" by solvent, water, heat or any other way.

In hot-melt scenarios, PSAs may have a high coating weight, such as 50 g/m² for critical applications like polyethylene ("PE") oil drums, rough surfaces, or labels that need to adhere for long period. When oriented polypropylene ("OPP") films for pressure-sensitive label ("PSL") applications are used with hot-melt PSAs, OPPs generally exhibit a behavior of curling and swelling. This behavior, without being bound to this theory, is believed to be due to migratory additives in the hot-melt that permeate into the OPP film and cause the swelling and curling away from the adhesive. Consequently, this behavior sometimes results in de-labeling.

De-labeling or other weakening in labeling adhesion may be critical in some applications, e.g., where heavy hot-melt layers have to be applied to give good adhesion, but which then result in a curling effect that weakens the adhesive bond, or when a label is applied to warm containers. Swelling/curling depends on both the quantity of hot melt and the time of contact with the support. Specific migratory-additive-free, hot-melt PSLs do exist, but such make the label more expensive. There is, therefore, a market interest and/or need to have specific curl-free or reduced-curl products that could work with a wide range of standard hot-melt adhesives. In addition, a film compliant with food safety regulation is also a breakthrough.
EP0461772A2 discloses a low oxygen transmissive film combination having a substrate with a surface having a surface free energy of at least about 35 dynes/cm, a primer coating on one or both sides and an oxygen transmissive inhibiting layer of a cross-linked poly(vinylalcohol) on one or both primer layers.
US4564559A discloses an oriented multi-layer heat sealable film structure comprising a polyolefin film substrate, a layer of a blend of LLDPE and polypropylene, a primer layer on said blend layer and a heat sealable layer on said primer layer.
EP0088535A2 discloses an oriented multilayer heat sealable film structure comprising a polyolefin film substrate, a layer of a random copolymer of ethylene and propylene, a primer layer on said copolymer layer and a layer of heat sealable vinylidene chloride polymer on said primer layer. The method of preparing said structure includes aging said structure at a temperature and for a time resulting in increased heat seal strength.
EP0012513A1 discloses a heat sealable thermoplastic film comprising a film substrate having coated on at least one surface thereof a primer coating comprising poly (ethylene- imine), said primer coating having a topcoating thereon said topcoating comprising a vinylidene chloride polymer in admixture with an effective amount of an anti-static additive.

### SUMMARY

Disclosed is a film structure, the film structure comprising: a base film having a first side and a second side, wherein the base film is transparent or opaque; a water-based primer applied to the first side; and a water-based coating applied to the first side having the water-based primer disposed thereon, wherein the water-based coating has a weight of at least 0.1 g/m²; wherein either (i) the water-based primer is epoxy-based and the water-based coating comprises acrylic or acrylate polymers, or (ii) the water-based primer is polyurethane-based and the water-based coating comprises acrylic or acrylate polymers or polyvinylidene chloride polymers; and wherein the base film comprises homopolymers, copolymers or terpolymers of ethylene, propylene, butene and combinations thereof; wherein the film structure is curl-free and presents a barrier to one or more migratory additives and components in a hot-melt adhesive if a hot-melt adhesive is applied on the first side. In one embodiment, the water-based coating has a weight of at least 0.1 g/m² through at least 0.8 g/m².

.

### BRIEF DESCRIPTION OF THE DRAWINGS

So that the manner in which the above recited features, advantages and objects of this disclosure are attained and may be understood in detail, a more particular description, briefly summarized above, may be had by reference to the embodiments thereof which are illustrated in the appended drawings.

It is to be noted, however, that the appended drawings illustrate only typical embodiments of this disclosure and are therefore not to be considered limiting of its scope, for the disclosure may admit to other equally effective embodiments.
FIG. 1 is a summary of evaluations for example curl-resistance compositions in accordance with this disclosure.
FIG. 2 provides example test protocols for disclosed compositions and methods in accordance with this disclosure.
FIG. 3 provides a legend for observations made in Figure 2.
FIG. 4 provides details about testing protocols for the data in Figure 2.
FIG. 5 shows data and setting parameters, respectively, for adhesion properties of different hot melts observed on two example film structures and compositions in accordance with this disclosure.
FIG. 6 is a table that includes measured properties for two structures (i.e., lead candidate 1 and lead candidate 2) having the same adhesive receptive-layer formulation, but with two different food-contact compliant printable coatings. The third roll is the same as the second roll (i.e., lead candidate 2), but the third roll also includes ~ 0.1 % Tergitol^{®}.
FIG. 7 shows summarized results printed by ultraviolet flexography ("UV-flexo") for excellent ink adhesion for the first two structures in Figure 6 in accordance with this disclosure.

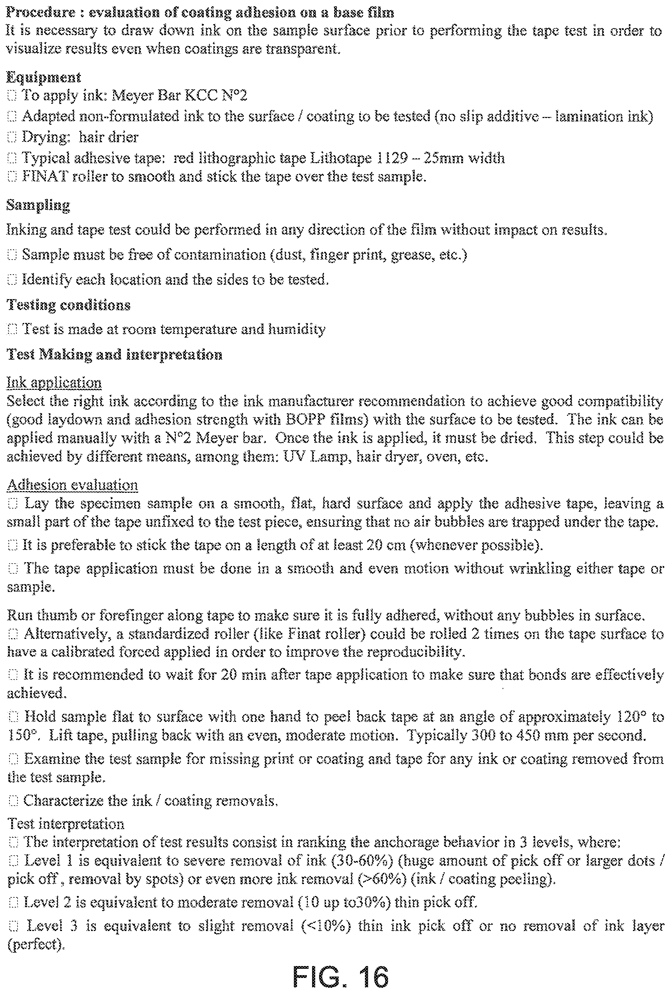

FIG. 8 shows summarized results printed by UV-flexography and cold-foil stamping techniques for excellent ink adhesion, as measured by FIG. 16, for the first two structures in Figure 6.
FIG. 9 shows summarized results printed by UV-screen printing for excellent ink adhesion, as measured by FIG. 16, for at least the first two structures in Figure 6 in accordance with this disclosure.
FIG. 10 shows summarized results printed by UV-flexography technique for excellent ink adhesion, as measured by FIG. 16, for at least the first two structures in Figure 6 in accordance with this disclosure
FIG. 11 provides setting parameters used for the data collected at Figures 8- 10.
FIG. 12 provides a table showing the effects of Sylobloc^{®} (*i.e.,* silica particles) and PTFE particles in an acrylic-coated base film on blocking tendency using a FL780-based (*i.e.,* acrylic) print side of the base film.
FIG. 13 provides a table showing the effects of several candidates as backsides, *i.e.,* first sides, for hot-melt, curl-resistant pressure- sensitive labels (PSL's).
FIG. 14 provides for the compositions in Figure 13 a first graph showing blocking averages in grams/25 mm.
FIG. 15 provides for the compositions in Figure 13 a graph showing tearability on a scale of 0-3.
FIG. 16 provides for the method for determining ink adhesion in accordance with this disclosure.

### DETAILED DESCRIPTION

The invention is a film structure as defined in the appended claims. This disclosure generally relates to methods, applications, film structures, labels, and so forth associated with a film that may be whitish or white opaque and may have a barrier to migratory additives from hot-melt adhesives in order to ensure that the film remains free from swelling and curling. Not limited to barrier coatings with hot-melt additives, this disclosure further discloses a unique label structure that combines enhanced printability on one side with various printing technologies, including, e.g. , and without limitation, ultraviolet ("UV") flexo, UV-offset, UV-letter press, hot/cold foil stamping, thermal transfer, combinations thereof, and so forth, and remarkable hot-melt, adhesive adhesions combined with a barrier effect that prevents the label from swelling and curling. In one example embodiment, a label structure is designed to avoid any significant blocking tendency in reel, i.e., the tendency of layers to stick among themselves. A slight (or no) blocking tendency allows the unwinding of the label reel without any significant problems.

Furthermore, the disclosed film structures, labels, and so forth comply with the legal requirements or recommendations in the EU-framework regulations on materials and articles intended for food contact, including Reg. (EC) No 1935/2004, as well as good manufacturing practices for materials and articles intended for food contact, including Reg. (EC) 2023/2006.

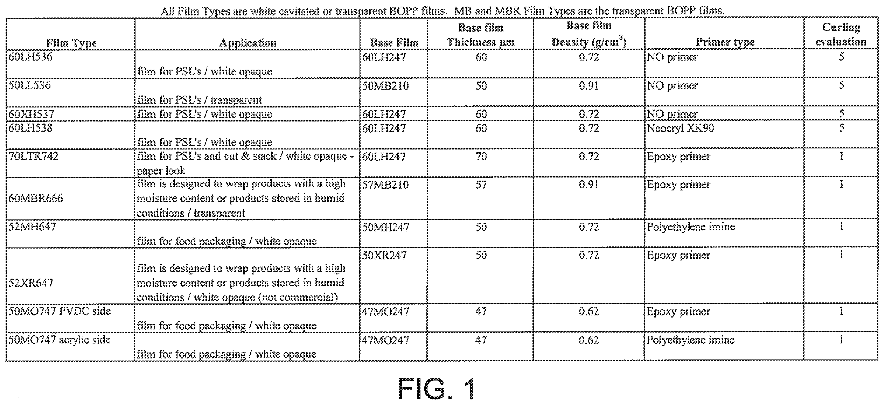

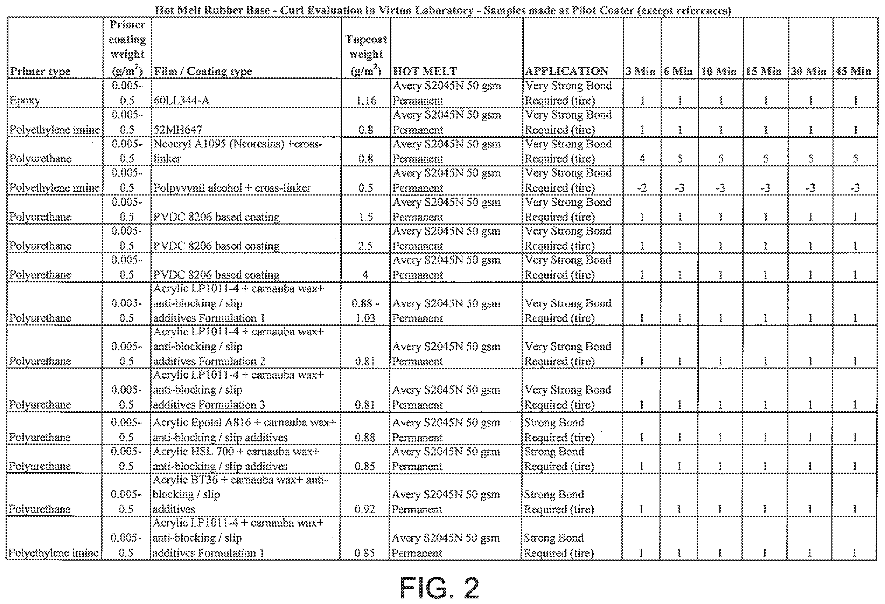

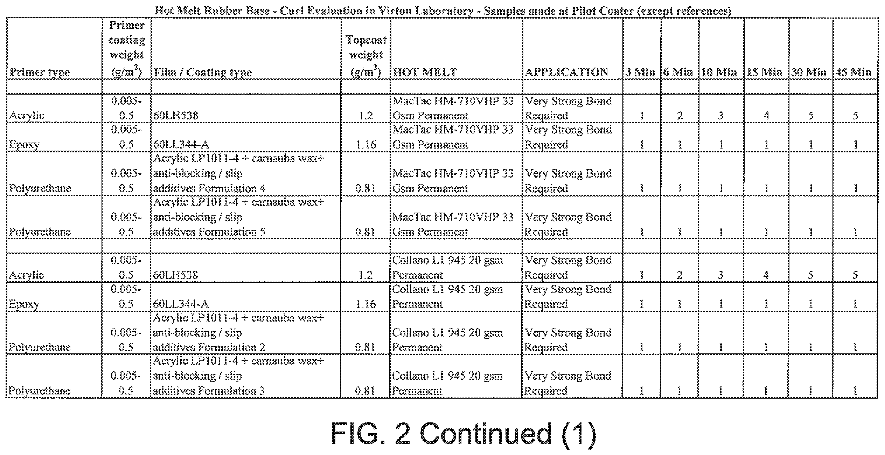

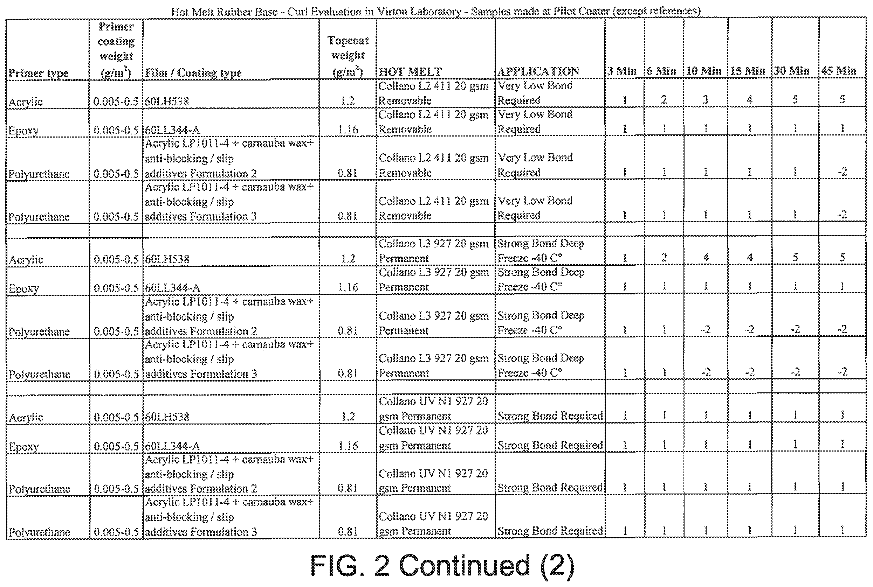

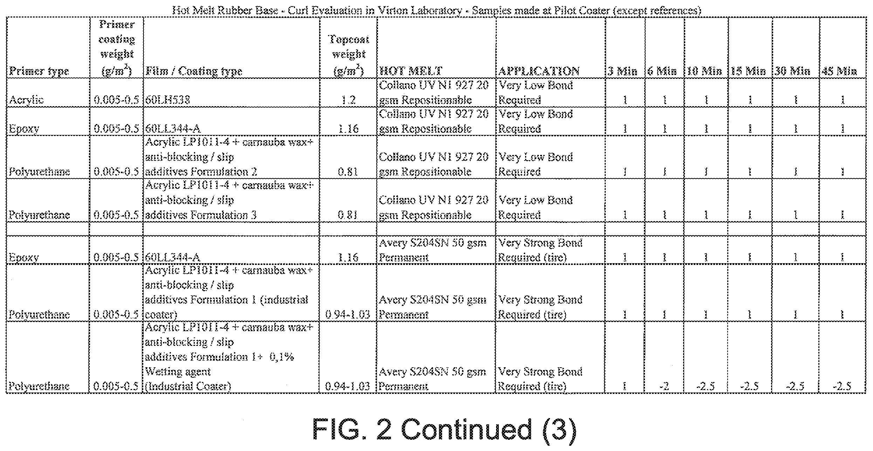

Research and development has occurred to evaluate the curl -resistance of several types of water-based primers and coatings on various optionally oriented base film structures that use Jindal Films'^{®} film types and base films. A summary of such curl -resistance evaluation is shown in Figure 1. Example test protocols are described in Figure 2. Acrylic coatings were formulated with colloidal silica on Jindal Films^{®} 50MH647 first primed with polyethylenimine ("PEI") based primer(s), or without colloidal silica on Jindal Films^{®} 52XR647 first primed with epoxy based primer(s), cf. US Pat. No. 4214039), wherein both of which primed coatings induced remarkable, curl-resistance performances. In the same way, polyvinylidene chloride ("PVDC") and clay coating, such as Mobil^{®} White 183 when coated on top of epoxy primers, were also found to be good candidates. Other clay or acrylic -based coatings, however, such as Neocryl^{®} XK90/FL780 (i.e., an acrylic-based polymer) from DSM^{®}, were not good barrier coatings for hot-melt components/additives. The best results were generally obtained with epoxy primers. Interesting routes were identified to design curl-free labels, wherein "curl-free" means at least a decreased amount of curl as compared to non-coated hot-melt receptive films. Several coating types combined with different primer types were found to induce improved resistance to curling and swelling with either transparent or whitish films.

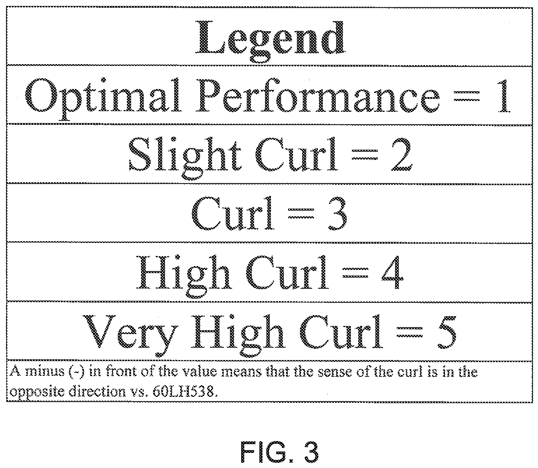

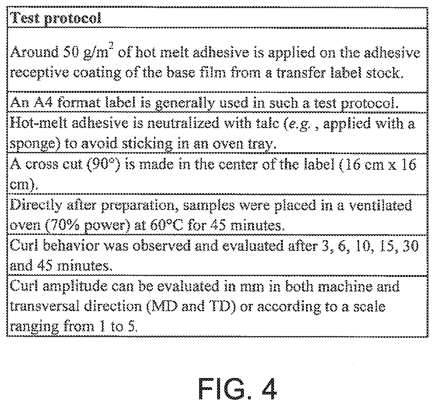

Additional research and development occurred to evaluate several parameters that may affect the curl-resistance, and, therefore, the barrier properties to hot-melt additives/components. References made on industrial coaters have been compared to other samples prepared on a pilot coater. Figure 2 summarizes evaluations made according to several variables:
- Base film type: white opaque Jindal Films^{®} 60LH242 and Jindal Films^{®} 50MH242;
- Film density: 0.72 g/cm³ (white) and 0.91 g/cm³ (clear)
- Primer types: one or more primer layers of PEI, polyurethane ("PU"), XK90/FL780, etc.
- Coating types: different acrylics/acrylates emulsions, PVDC, polyvinyl alcohol ("PVOH"), clay-based coatings, or combinations thereof, etc.
- Additive types/amounts: waxes; antiblock particles; e.g., Sylobloc^{®} (i.e., silica), talc, polymethyl methacrylate ("PMMA"), or combinations thereof, etc.; crosslinkers, e.g., ammonium zirconium carbonate ("AZC"), cymel melamine formaldehyde, etc.
- Coating weight: primarily investigated with PVDC and acrylic coatings
- Adhesive type: permanent; removable; permanent strong bond deep freeze; UV permanent; UV repositionable supplied by Avery^{®}, MacTac^{®} or Colano^{™}
The claimed invention requires either that (i) the water-based primer is epoxy-based and the water-based coating comprises acrylic or acrylate polymers, or that (ii) the water-based primer is polyurethane-based and the water-based coating comprises acrylic or acrylate polymers or polyvinylidene chloride polymers, and example film structures in Figure 2 not having these coating and primer combinations are reference examples only. Details about these evaluations are shown in Figure 2-4, wherein Figure 3 provides a legend regarding Figure 2, and Figure 4 provides details about testing protocols for the data in Figure 2. However, Figure 2 represents merely example film densities. Film densities in other example embodiments may range from 0.54 to 0.94 if other polyolefin base films are used that are clear, white, and/or contain a higher concentration and/or denser particles. For example, the optionally oriented base film may include homopolymers, copolymers or terpolymers of ethylene, propylene, butene, or combinations thereof. By further example, a non-polyolefin base film, such as polyester having a density of 1.4 g/cm³, may be primed and coated for curl-resistant, hot-melt structures and compositions that may include the added functionalities of printability, etc. as discussed in this disclosure.

For reasons such as food compliance with the EU regulation requirements, the need for low volatile organic compound ("VOC") emissions and for some film resistance to humidity, research and development were focused mainly on PU primers, even though other types, e.g. , PEI, epoxys, acrylates based primers, etc., may be considered to be good candidates. See Figure 1. The claimed invention requires PU or epoxy primers and other examples are provided as reference examples only. The effect of the coating weight on the curl-resistance was evaluated mainly with PVDC coatings, i.e., B206-type from Solvin^{®}. Coating weights of films, e.g., Jindal Films^{®} 60LH538, Jindal Films^{®} 60LL344-A, Jindal Films^{®} 50MH647, were close to their specifications' requirements. Coating weight of acrylic-based coatings were generally around 0.8 g/m². The amounts of monomer and co-monomer types used to manufacture acrylic polymer or copolymer solutions or emulsions (e.g., methylmethacrylates, methyl acrylates, acrylic acid, acrylic/styrene based copolymers, etc.) might significantly vary from one version/vendor to another (e.g., DSM^{®}, BASF^{®}, Dyflex^{®}, ...). Some additional components, including, e.g., cross-linkers, anti-block particles or anti-slip additives, may be used to optimize the film design to obtain the desired structures and be compliant with the label-market requirements, e.g., coefficient of friction, no sticking/blocking effect during reel unwinding, controlled hot melt adhesive adhesion, optimal printability, etc.

The results summarized in Figure 2 show that acrylic coatings LP 1011-4 (Dyflex), HSL 700 (BASF), Epotal A816 (BASF) and BT 36 (DSM) overcome the effect of hot melt adhesives and prevent the label from curling and swelling. Mixtures of acrylic emulsions or acrylic/styrene copolymer dispersions (e.g., respectively Neocryl XK90 / FL780 and A- 1094) and PVDC coatings also appear as good receptive layers for hot melts adhesives, whatever the coating weight evaluated (from 1.5 to 4 gr/m²). However, in the case of Jindal Films^{®} 60LL344, the effect may be due to the epoxy primer more than the topcoat, itself. Indeed, when used as major component or together with clay-based coatings on other primer types, these coatings did not demonstrate curl-resistance properties. For instance, a cross-linked Neocryl A- 1095 based coating or Jindal Films^{®} 60LH538 (clay-based coating) exhibits significant levels of curl after a few minutes at 60°C with several permanent and removable hot melts. This shows that curl -resistance may result from both the effects of the primer and the topcoat. Receptive layers made from polyvinyl alcohol ("PVOH") solution or clay-based coatings do not seem appropriate either, even when cross-linked with a melamine formaldehyde based cross-linker. The PVOH-coated sample curls in the opposite direction of what was observed with the other candidates. When the film is removed from the oven, the curl comes back to -2. Without being bound to any theory, this curling may be due to humidity absorption by the coating.

Other samples were made at the pilot coater to evaluate the curl-resistance induced by the PU primer and the impact of the acrylic coating weight. PU primer (R610) did not induce curl-resistance at all or to any significant extent. On the contrary, 0.1 g/m² of acrylic coating did seem sufficient to generate curl-resistance.

These evaluations highlighted that all the tested rubber-based adhesives induced curl with some inadequate film structures, except the UV adhesives. Without being bound to any theory, it is believed that the UV rubber-based adhesives, which have no or a lower amount of migrating additives/components, are not generating curl as the hot-melt is cross- linked and likely formulated differently as compared to standard hot melts. Migration of additives/components, if any, from the hot melt to the film is significantly decreased or fully stopped.

### Film structure for Hot melt Curl free PSL applications

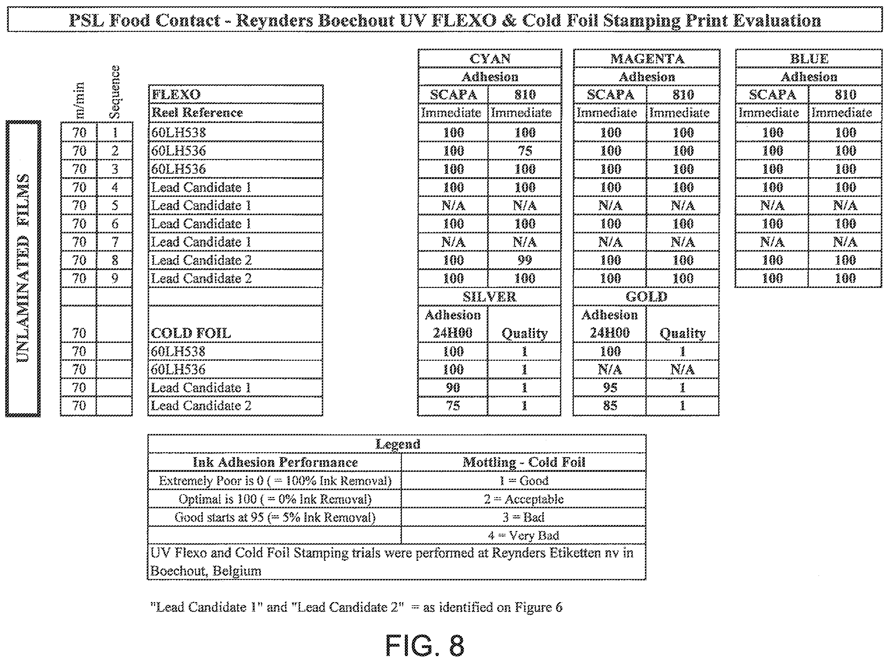

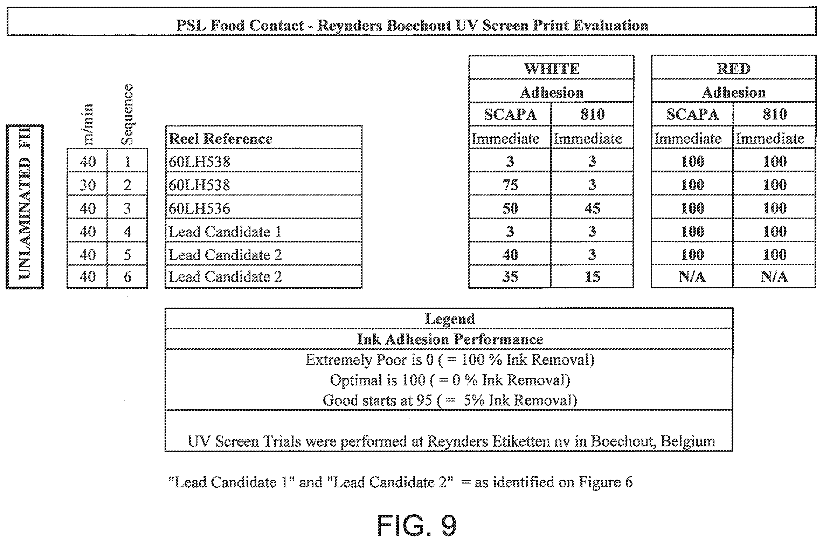

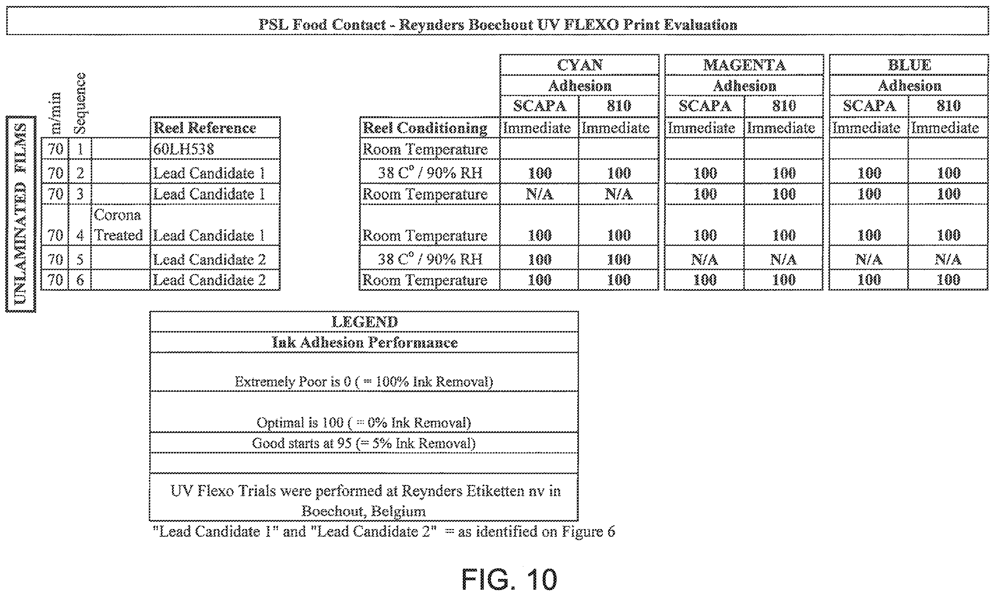

The developed film design for hot-melt, curl-free applications offers an adhesive-receptive layer with specific surface properties that ensure a high level of the hot-melt adhesive's adhesion and unique properties in order to prevent the label from curling after hot-melt applications. In addition, these remarkable properties are also combined with excellent printability properties on the base film's second side (i.e., non-adhesive side) with various inks and printing technologies, including, e.g., UV-flexo, UV offset, UV letter press, UV screen, hot/cold foil stamping or thermal transfer ribbon ("TTR"). Printed ink adhesion percentages on the second side are illustrated in example embodiments in Figures 8- 10. The base film's first side (i.e., adhesive side), as well as the second side, may be printed with solvent-based inks. Furthermore, coatings on both sides of the film were designed and formulated to adapt the affinity of their highly functionalized surfaces in order to avoid any tendency of layers of the reels to stick against themselves and facilitate the unwinding of the reel at high speed.

### Hot-melt adhesion properties

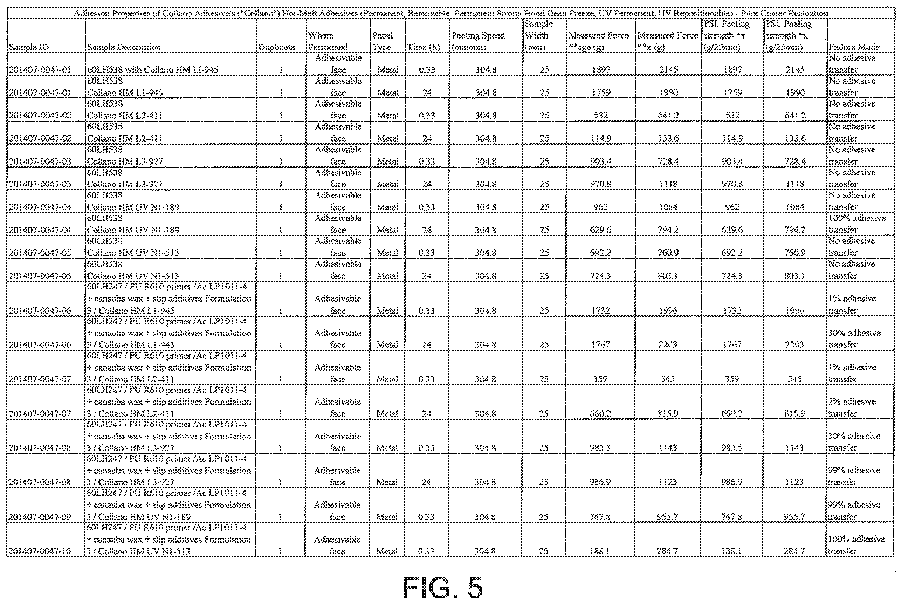

Figures 5 show data and setting parameters, respectively, for adhesion properties of different hot melts observed on two film structures. The first one in Figure 5, i.e., Jindal Films^{®} 60LH538, is a commercial film for PSL applications that proved not to be fully satisfactory when using hot-melt adhesive since the raw materials used in the adhesive-receptive layer do not prevent the film from curling. The second one is a proprietary acrylic coating manufactured by Dyflex^{®} and formulated with carnauba wax and talc. Figure 5 data, at least in part, supports the asserted conclusion or fact that the investigated acrylic -based coating exhibits both peeling strength and failure modes that are within expectations, except when using the hot melt L3-927 (permanent - Strong Bond Deep Freeze -40 °C/°F) after 24 hours of aging and with UV hot melts after 20 minutes. However, in the first case, the peeling strength remains very high, and, in the second, the purpose of such a structure is to avoid UV hot-melt adhesives, which are much more expensive.

### Printability

Two rolls were produced on an industrial coating machine according the following structures: 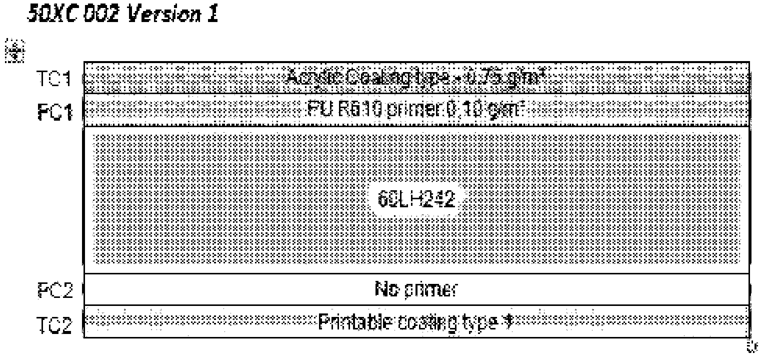 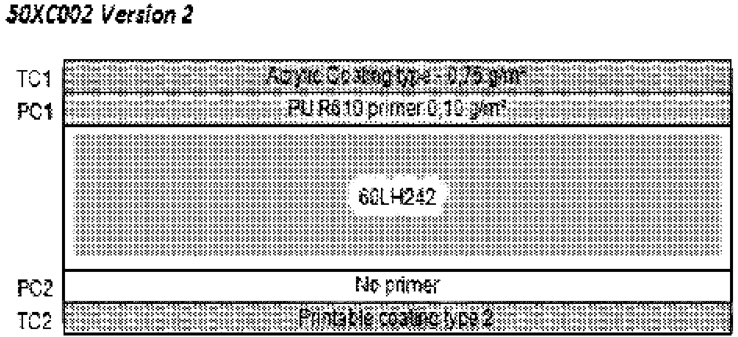
- Humidity resistant Acrylic coating based on LP1011-4 from Dyflex^{®} + Carnauba Wax from Michelman + talc LUZENAC 50 EC G from IMCD Benelux BV^{®}
- PU primer: Neorez^{®} R610 from DSM^{®} Neoresins

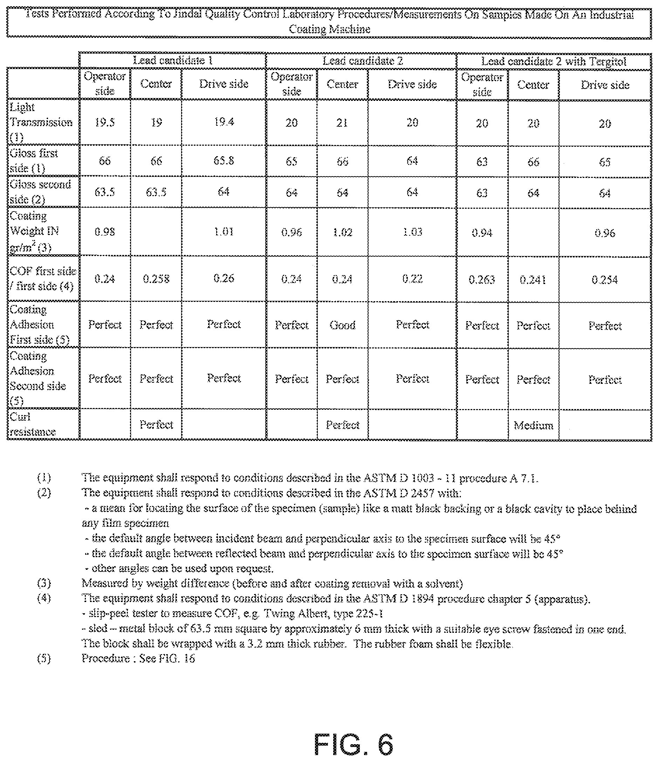

A third roll was made using Tergitol^{®} 15S9 from Univar Benelux^{®} to improve wettability. Some properties were measured at the quality control lab and reported in Figure 6. Two rolls were made respectively according to version 1 and 2, i.e., the name of the above-shown structures. These structures have the same adhesive receptive-layer formulation, but two different food contact compliant printable coatings. The third roll was made according to the version 2, but using ~ 0.1 % Tergitol^{®} 15S9 (versus the total weight of the batch) in the HRAC coating. Curl resistance was remarkable on the first two rolls (S2045N hot melt adhesive from Avery Dennison). Tergitol^{®} 15S9, however, seemed to degrade the curl-resistance.

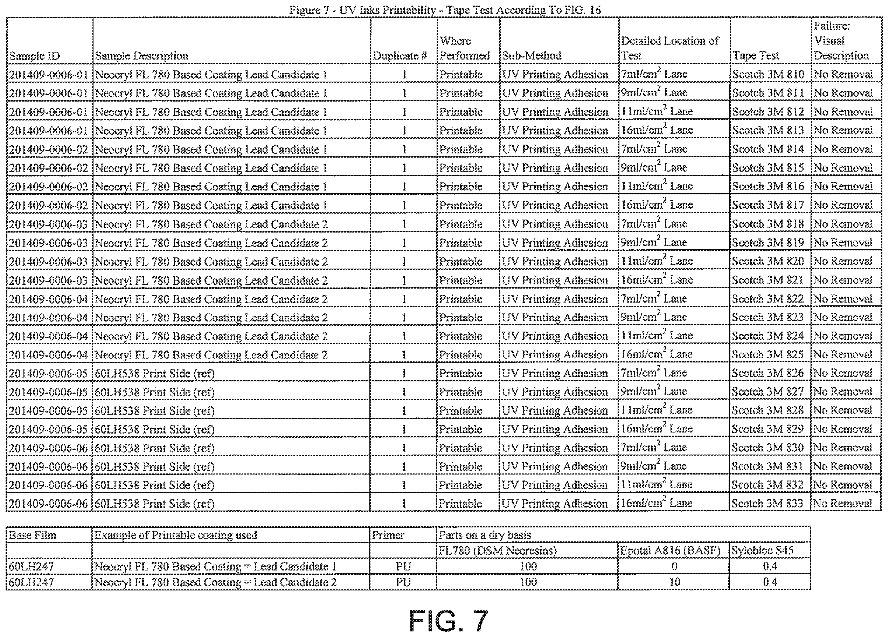

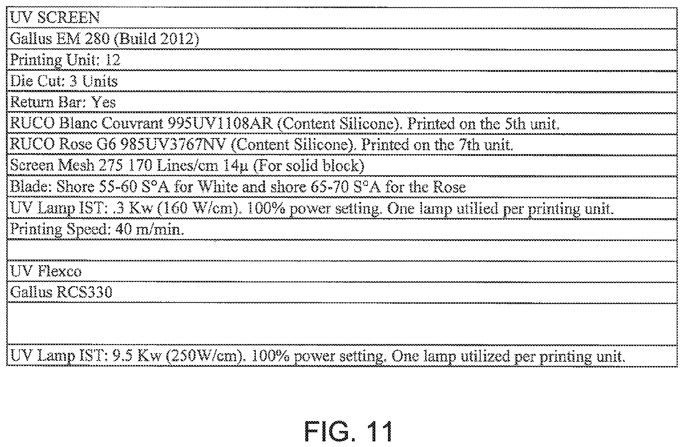

Tests performed on samples from the two lead candidates (i.e., Lead candidate 1 & 2), printed in UV-flexo in an analytical lab and at a label converter showed excellent ink adhesion, as shown by the results summarized in Figure 7. Other selected printing technologies, including e.g., TTR, UV Letterpress, hot and cold foil stamping, were also found to work well with the new film designs as shown in Figure 8-10, wherein Figure 11 provides setting parameters used for the data collected at Figures 8-10.

Printability was not affected after reels storage in tropical conditions, i.e., simulating any cross -contamination from the backside to the printable side.

### Blocking Properties

Slit rolls were made from a mill roll produced during a manufacturing run on an industrial coater. The slitting machine ran at 500 m/min without any issue (e.g. , web break due to blocking). Layers very close to the core were barely sticking. Performances, therefore, were in line with our expectations. These slit rolls (320 mm) were stored for one week under tropical conditions (38°C/90% RH), and then unwound at 400 m/min. No severe blocking tendency was noticed even under these severe testing conditions.

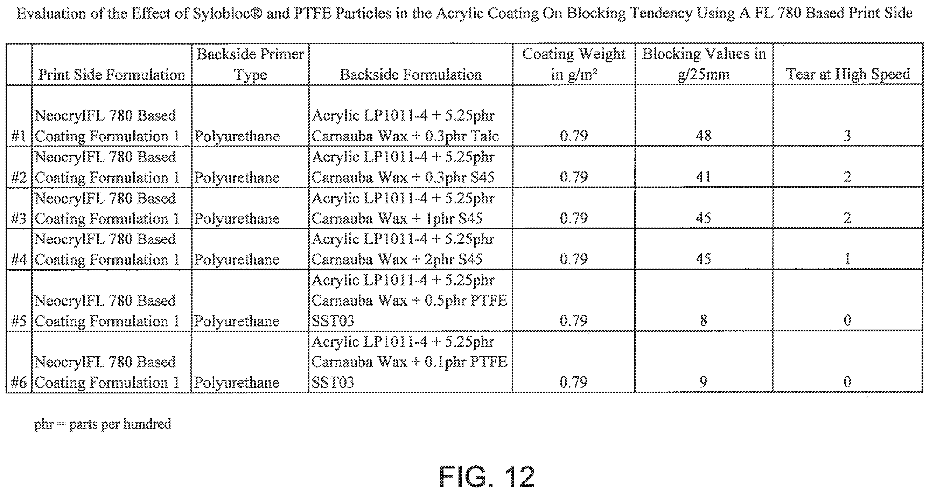

Some formulation modifications have also been evaluated at the pilot coater and quality control lab in order to further improve the blocking properties if, for instance, such is needed in a later development stage. The results, in Figure 12, showed that adding Sylobloc^{®} S45 silica (Grace Davison^{®}) instead of talc (similar or higher amount) improved blocking values. Very low amounts of polytetrafluoroethylene ("PTFE") particles (Shamrock^{®}), e.g., 0.1 phr, also have a significant impact on blocking reduction. Generally, however, antiblocking agents to one or more surfaces of the first side, second side, or both may be organic, inorganic, or combinations thereof. Moreover, even though a polyurethane primer was used in these example embodiments, other primers, such as those discussed in this disclosure, could have been used without departing from the results.

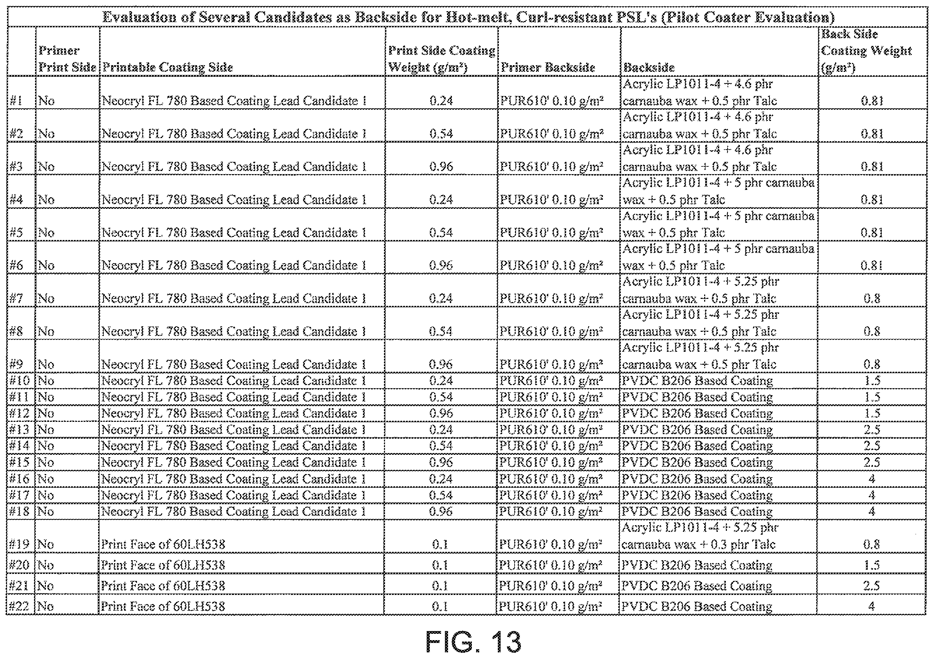

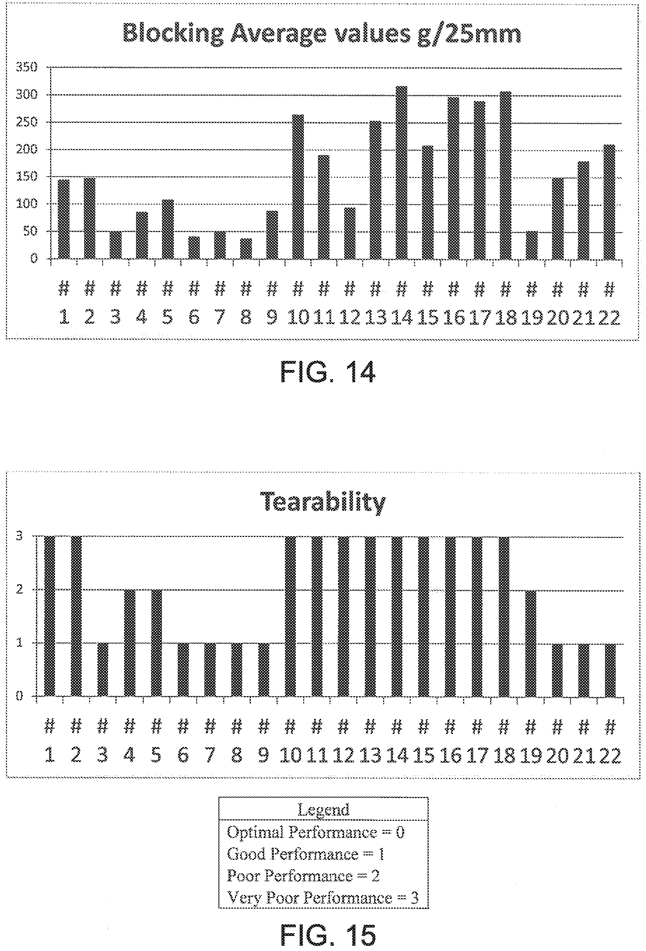

Further research and development on blocking properties occurred in order to highlight differences between acrylic and PVDC based coatings (B206 from Solvay^{®}). The tests were performed using two different printable coatings, i.e., Jindal Films^{®} 60LH538 print face and the version designed for the new PSL food contact compliant, hot-melt, curl-resistance. The results summarized in Figures 13-15 show that the acrylic-based versions show much lower blocking values, wherein quality control tests were performed in line with the general description found at paragraph [0042] herein. As a general rule, the higher the wax and talc levels in acrylic -based coatings, the lower the blocking values and ability to tear, i.e., "tearability." Higher printable coating weights induce a positive influence also. PVDC, which is curl-resistant, generates much higher blocking values versus acrylics, no matter what coating weights are used. The best values were observed on low PVDC coating weight combined with a high printable coating weight (e.g., #12 in Figure 13). The Jindal Films^{®} 60LH538 printable coating has a positive influence on tearability, despite high PVDC blocking values. Acrylic - based solutions also offer the advantage to be chlorine free.

Research and development identified several candidates and potential formulations based on several coating and primer types that may be used on many different, optionally oriented base films for PSAs where a resistance to curl and swelling is desired or required. Lead candidates were based on specific acrylic coatings on the adhesive receptive layer combined with a printable coating, i.e., printable face. Both coating types were formulated to comply with manufacturing requirements and customers' expectations.

Testing protocols followed in the provision of data herein is summarized below.

### UV Printing with the IGT Fl Equipment

- UV printing of plastic films is performed with the IGT Fl equipment.
- Laboratory UV inks: Flexocure Gemini Cyan Process (ref. UFG - 0080-408). Other inks may be used.
- Film samples must be clean and exempt of finger marks, grease, dust, humidity, and so forth. The format of the samples was 630 mm x 50 mm.
- Anilox disc force is set at the default value of 100 Newtons (N).
- Force of the impression cylinder is set at the default value of 150 Newtons (N).
- Printing speed is also set at the default value of 0.2 meter/second.
- Direct ink transfer from anilox disc to the flexo plate and to the samples.
- Anilox discs with 4 different ink weights are used: 7-9-11-16 ml/cm².

### Drying of UV Inks

- UV inks drying on plastic films is performed with a UV dryer from PRIMARC Minicure UV Technology
- Drying takes place just after UV inks are printed with the IGT Fl equipment
- Samples are maintained with tape on a rigid support to keep them flat during UV curing
- UV Lamps type: Standard Medium Pressure Mercury lamps PL1500 - 120 W/cm
- UV curing is set at maximum power (100%), but can be adapted upon request
- Conveyor speed is set at 30 - 32 meters / minute

### Ink Adhesion on Films for Pressure-Sensitive Label Applications Using Tape

- The ink adhesion is estimated by the amount of ink that can be removed.
- UV inks are applied on filmic substrate with the IGT Fl equipment and dried using a UV dryer from PRIMARC Minicure UV Technology.
- Typical adhesive tape of high peel adhesion are used:
   ∘ Red Lithographic tape Lithotape 1129 - 25 mm width
   ∘ 3M Scotch^{®}810 Magic TM tape
- The adhesive tapes are applied on the samples without any air bubbles trapped under the tape.
- A standardized Finat Roller is rolled two times on the tape surface to have a calibrated force on the sample and improve the reproducibility of the tests.
- The tape is applied on a length of at least 20 cm.
- When using the 3M Scotch^{®} 810 Magic TM tape, it is recommended to perform the peeling test 10 minutes after tape application.
- The sample is held to the surface with one hand. The tape is peeled back at an angle of approximately 120 to 150 degrees.
- Tape is lifted and pulled back with an even and moderate motion at typically 300 to 450 mm per second.
- The interpretation of the test results consist in ranking the anchorage behavior in 3 levels:
   ∘ Level 1 is equivalent to a severe removal of ink (30-60% or even more )
   ∘ Level 2 is equivalent to a moderate removal of ink (10 up to30%)
   ∘ Level 3 is equivalent to a slight (<10%) or no removal of the ink
- In some cases, values can be recorded in percentage of ink removed from the surface.

### Blocking Test under Accelerated Conditions

- The blocking test is performed to simulate the tendency of film layers in a reel to stick to themselves.
- The equipment used to perform the blocking test is a laboratory press SPECAC 15.011 (plates diameter = 10 cm/plates surface = 78.5 cm ).
- 2 pieces of film approximately 2 cm wider and longer than the steel plates of the laboratory press are superposed and centered between the 2 steel plates of the press.
- Film samples are pressed against each other into the press under 53 kg/cm pressure during 60 minutes at 60°C +/- 3°C.
- 25 mm wide strips are cut at the center of the samples.
- Blocking measurements are performed using a Friction-Peel tester (Thwing-Albert model 225-1).
- One film layer is fastened on one end of the plate of the Friction-Peel tester and the other one to the measuring cell.
- A 90° angle between the sample and the surface of the Friction-Peel tester.
- Peeling speed is set at 15 cm/min and results are displayed in grams/25 mm.

## Claims

1. A film structure, the film structure comprising:
a base film having a first side and a second side, wherein the base film is transparent or opaque;
a water-based primer applied to the first side; and
a water-based coating applied to the first side having the water-based primer disposed thereon, wherein the water-based coating has a weight of at least 0.1 g/m²;
wherein either (i) the water-based primer is epoxy-based and the water-based coating comprises acrylic or acrylate polymers, or (ii) the water-based primer is polyurethane-based and the water-based coating comprises acrylic or acrylate polymers or polyvinylidene chloride polymers; and
wherein the base film comprises homopolymers, copolymers or terpolymers of ethylene, propylene, butene and combinations thereof;
wherein the film structure is curl-free and presents a barrier to one or more migratory additives and components in a hot-melt adhesive if a hot-melt adhesive is applied on the first side.

2. The film structure of claim 1, wherein the base film is oriented.

3. The film structure of claim 1, wherein the water-based coating comprises acrylic, optionally humidity-resistant, and with or without colloidal silica.

4. The film of claim 1, wherein the water-based coating comprises polyvinylidene chloride, optionally together with cross-linkers, anti-block particles, anti-slip additives, or combinations thereof.

5. The film of claim 1, wherein the hot-melt adhesive comprises one or more ultraviolet rubber-based adhesives.

6. The film structure of claim 1, which is in the form of a label.

7. The film structure of claim 1, wherein the first side, the second side, or both, are printable with one or more solvent-based inks.

8. The film structure of claim 1, wherein the second side is printable with one or more ultraviolet inks.

9. The film structure of claim 1, wherein the base film has a density within a range from 0.50 g/cm³ to 1.4 g/cm³

10. The film structure of claim 1, wherein the first side, the second side, or combinations thereof, have one or more antiblocking surfaces.

11. The film structure of claim 1, wherein the base film, water-based primer, or combinations thereof, further comprise one or more additives.

12. The film structure of claim 1, wherein the water-based coating is applied as an acrylic polymer or copolymer solution or emulsion.

13. The film of claim 1, wherein the water-based coating further comprises additives selected from: waxes; anti-block particles; or crosslinkers.

## Patentansprüche

1. Folienstruktur, wobei die Folienstruktur Folgendes umfasst:
eine Basisfolie, die eine erste Seite und eine zweite Seite aufweist, wobei die Basisfolie transparent oder undurchsichtig ist;
einen wasserbasierten Primer, der auf der ersten Seite aufgebracht ist; und
eine wasserbasierte Beschichtung, die auf der ersten Seite aufgebracht ist, auf der der wasserbasierte Primer angeordnet ist, wobei die wasserbasierte Beschichtung ein Gewicht von mindestens 0,1 g/m² aufweist;
wobei entweder (i) der wasserbasierte Primer auf Epoxidbasis ist und die wasserbasierte Beschichtung Acryl- oder Acrylatpolymere umfasst oder (ii) der wasserbasierte Primer auf Polyurethanbasis ist und die wasserbasierte Beschichtung Acryl- oder Acrylatpolymere oder Polyvinylidenchloridpolymere umfasst; und
wobei die Basisfolie Homopolymere, Copolymere oder Terpolymere von Ethylen, Propylen, Buten und Kombinationen davon umfasst;
wobei die Folienstruktur kräuselfrei ist und eine Barriere für eine(s) oder mehrere migrierende Additive und Komponenten in einem Schmelzkleber darstellt, falls ein Schmelzkleber auf die erste Seite aufgebracht wird.

2. Folienstruktur nach Anspruch 1, wobei die Basisfolie orientiert ist.

3. Folienstruktur nach Anspruch 1, wobei die wasserbasierte Beschichtung Acryl umfasst, optional feuchtigkeitsbeständig ist und kolloidales Siliciumdioxid umfasst oder nicht.

4. Folie nach Anspruch 1, wobei die wasserbasierte Beschichtung Polyvinylidenchlorid, optional zusammen mit Vernetzern, Antiblockmitteln, Anti-Slip-Additiven oder Kombinationen davon, umfasst.

5. Folie nach Anspruch 1, wobei der Schmelzkleber einen oder mehrere UV-Klebstoffe auf Kautschukbasis umfasst.

6. Folienstruktur nach Anspruch 1, die in der Form eines Etiketts vorliegt.

7. Folienstruktur nach Anspruch 1, wobei die erste Seite, die zweite Seite oder beide mit einer oder mehreren lösungsmittelbasierten Tinten bedruckbar sind.

8. Folienstruktur nach Anspruch 1, wobei die zweite Seite mit einer oder mehreren UV-Tinten bedruckbar ist.

9. Folienstruktur nach Anspruch 1, wobei die Basisfolie eine Dichte in einem Bereich von 0,50 g/cm³ bis 1,4 g/cm³ aufweist.

10. Folienstruktur nach Anspruch 1, wobei die erste Seite, die zweite Seite oder Kombinationen davon eine oder mehrere Antiblock-Oberflächen aufweisen.

11. Folienstruktur nach Anspruch 1, wobei die Basisfolie, der wasserbasierte Primer oder Kombinationen davon ferner ein oder mehrere Additive umfassen.

12. Folienstruktur nach Anspruch 1, wobei die wasserbasierte Beschichtung als eine Acrylpolymer- oder Copolymerlösung oder - emulsion aufgebracht ist.

13. Folie nach Anspruch 1, wobei die wasserbasierte Beschichtung ferner Additive umfasst, die ausgewählt sind aus: Wachsen; Antiblockmitteln oder Vernetzern.

## Revendications

1. Structure de film, la structure de film comprenant :
un film de base présentant un premier côté et un second côté, dans laquelle le film de base est transparent ou opaque ;
une couche primaire à base d'eau appliquée sur le premier côté ; et
un revêtement à base d'eau appliqué sur le premier côté sur lequel est disposée la couche primaire à base d'eau, dans laquelle le revêtement à base d'eau présente un grammage d'au moins 0,1 g/m² ;
dans laquelle soit (i) la couche primaire à base d'eau est à base d'époxy et le revêtement à base d'eau comprend des polymères acryliques ou d'acrylate, soit (ii) la couche primaire à base d'eau est à base de polyuréthane et le revêtement à base d'eau comprend des polymères acryliques ou d'acrylate ou des polymères de chlorure de polyvinylidène ; et
dans laquelle le film de base comprend des homopolymères, des copolymères ou des terpolymères d'éthylène, de propylène, de butène et des combinaisons de ceux-ci ;
dans laquelle la structure de film est exempte de tuilage et forme une barrière contre un ou plusieurs additifs et composants migrateurs présents dans un adhésif thermofusible si un adhésif thermofusible est appliqué sur le premier côté.

2. Structure de film selon la revendication 1, dans laquelle le film de base est orienté.

3. Structure de film selon la revendication 1, dans laquelle le revêtement à base d'eau comprend un acrylique, éventuellement résistant à l'humidité, et avec ou sans silice colloïdale.

4. Film selon la revendication 1, dans lequel le revêtement à base d'eau comprend du chlorure de polyvinylidène, éventuellement avec des agents de réticulation, des particules antibloquantes, des additifs antidérapants ou des combinaisons de ceux-ci.

5. Film selon la revendication 1, dans lequel l'adhésif thermofusible comprend un ou plusieurs adhésifs à base de caoutchouc aux ultraviolets.

6. Structure de film selon la revendication 1, qui se présente sous la forme d'une étiquette.

7. Structure de film selon la revendication 1, dans laquelle le premier côté, le second côté, ou les deux, sont imprimables avec une ou plusieurs encres à base de solvant.

8. Structure de film selon la revendication 1, dans laquelle le second côté est imprimable avec une ou plusieurs encres à ultraviolets.

9. Structure de film selon la revendication 1, dans laquelle le film de base présente une densité comprise dans une plage de 0,50 g/cm³ à 1,4 g/cm³.

10. Structure de film selon la revendication 1, dans laquelle le premier côté, le second côté, ou des combinaisons de ceux-ci, présentent une ou plusieurs surfaces antibloquantes.

11. Structure de film selon la revendication 1, dans laquelle le film de base, la couche primaire à base d'eau, ou des combinaisons de ceux-ci, comprennent en outre un ou plusieurs additifs.

12. Structure de film selon la revendication 1, dans laquelle le revêtement à base d'eau est appliqué sous la forme d'une solution ou émulsion de polymère ou copolymère acrylique.

13. Film selon la revendication 1, dans lequel le revêtement à base d'eau comprend en outre des additifs choisis parmi : des cires ; des particules antibloquantes ; ou des agents de réticulation.
